# EUROPEAN PATENT APPLICATION

(11) **EP 4 215 416 A1**
(43) Date of publication of application: **26.07.2023**
(21) Application number: 22152157.8
(22) Date of filing: 19.01.2022
(51) Int. Cl.: B60R 1/24, B60R 1/25

(54) **A METHOD OF COMBINING TWO IMAGES WITH AN OVERLAPPING FIELD OF VIEW TO GENERATE A WIDE-ANGLE VIEW EXTENDING AROUND AT LEAST 270°**

(71) Applicant: VOLVO TRUCK CORPORATION, 405 08 Göteborg (SE)
(72) Inventor: BERNE, Nicolas, 38540 Heyrieux (FR); RACHIDI, Mohammed, Gothenburg 41304 (SE)
(74) Representative: Germain Maureau

(57) **Abstract**

The invention relates to a method of combining a first and a second captured images with an overlapping field of view (O) to generate a wide-angle view extending around at least 270°, said images being respectively captured by a right and a left camera monitoring systems (2a, 2b) of a truck (1), characterized in that the method comprises:
A. using the left camera (6a) to capture a first images of a first field of view (F1) located in a front (F) and left front side (LFS) of the truck (1),
B. using the right camera (6b) to capture a second image of a second field of view (F2) located in a front (F) and right front side (RFS) of the truck (1),
C. Processing the captured images,
D. Merging the two captured images at stitching line (S).

## Description

### TECHNICAL FIELD

The invention relates to a method of combining two images with an overlapping field of view to generate a wide-angle view extending around at least 270°, said two images being respectively captured by right and left Camera Monitoring Systems (CMS) of a truck.

### BACKGROUND

A trend in industrial vehicles is to replace conventional outside mirrors by Camera monitoring Systems (CMS), which comprise a supporting arm mounted on the vehicle cab and a camera arranged on said supporting arm, for providing a captured image of an area located rearwards and along a vehicle side. An image, resulting from the processing of the captured image, can typically be displayed on a monitor screen inside the driver's compartment.

The camera monitoring systems must be arranged to provide to the vehicle driver an appropriate image displayed on the monitor screen, to ensure good visibility, hence safety.

In addition to the two lateral screens displaying the images captured respectively by right and left cameras, vehicle dashboard is also provided with a Driver Information Display (DID) arranged behind steering wheel and a Secondary Information Display (SID) arranged approximately in the middle of the dashboard. During parking manoeuvres, loading/unloading operations and the like, said SID can be used to display a wide-angle view extending from the Front Left Side view of the truck to the Front Right Side, which represents an angle of view of about 270°.

According to applicable regulation, and in particular regulation UN ECE n°46, Front Left Side (FLS) views and Right Left Side (RLS) views correspond to views of Class V and front view corresponds to view of class VI.

Today, Front Left Side (FLS) views and Right Left Side (RLS) views, i.e. views according to Class V, can be captured by the right and left CMS by pivoting the support arm in a front position dedicated for manoeuvres. However, the Right and Left CMS are not capable of capturing the totality of Class VI view, meaning that there are some grey zones. This is why some trucks are provided with an additional front camera for covering Class VI area. Nevertheless, this is an additional cost.

An object of the invention is to be capable of displaying on dashboard SID a wide-angle view covering Class V & VI views without using this additional front camera and with an acceptable image resolution.

### SUMMARY

The invention concerns a method according to claim 1.

By the provision of the method according to the present invention, the advantage is to provide a wide field of view, i.e. having an angle of at least 270°, in front and front side of the vehicle cab by using two camera monitoring systems located at specific places on the truck. The processing of the captured images including the merging of the two captured images at stitching line permits to display a unique image having a high quality and visibility. Furthermore, the implementation of the two camera monitoring systems allows a cost saving.

In another embodiment, the overlapping field of view is an intermediate area delimiting the edges of images captured by the left and the right camera monitoring systems.

In another embodiment, the overlapping field of view corresponds to the overlap of part of first field of view and the second field of view located in front of the truck.

In another embodiment, in step D), the captured images of the right and left camera monitoring systems are merged and stitched horizontally and/or vertically the first and the second images in a way that part of first field of view and part of the second field of view.

In another embodiment, the stitching is performed by a controller configured to process an algorithm that combines pixel-to-pixel comparison and gradient descent.

In another embodiment, the field of view of each camera monitoring system is between 150 and 190°.

In another embodiment, the truck has a speed below 10km/h.

In another embodiment, the method further comprises transmitting the two captured images data provided by said two camera monitoring systems through a vehicle internal communication network.

In another embodiment, the controller is linked to the vehicle internal communication network.

In another embodiment, each supporting member are mounted on each A-pillar of the truck.

In another embodiment, each camera is configured to provide a field of view according to regulation UN ECE n°46 Class II and IV or Class V.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Figure 1 illustrates a view of the camera monitoring systems at its driving position.
Figure 2 illustrates a top view of the vehicle with camera monitoring systems at their three limit positions.
Figure 3 illustrates details of camera monitoring systems at the driving position. Figure 3 represents a back view of a camera monitoring system at the passenger side of the vehicle, wherein the lens is directed backward.
Figures 4a, 4b, 4c illustrate details of the camera assemblies 2 at its intermediate position (4a), driving position (4b) and rest position (4c).

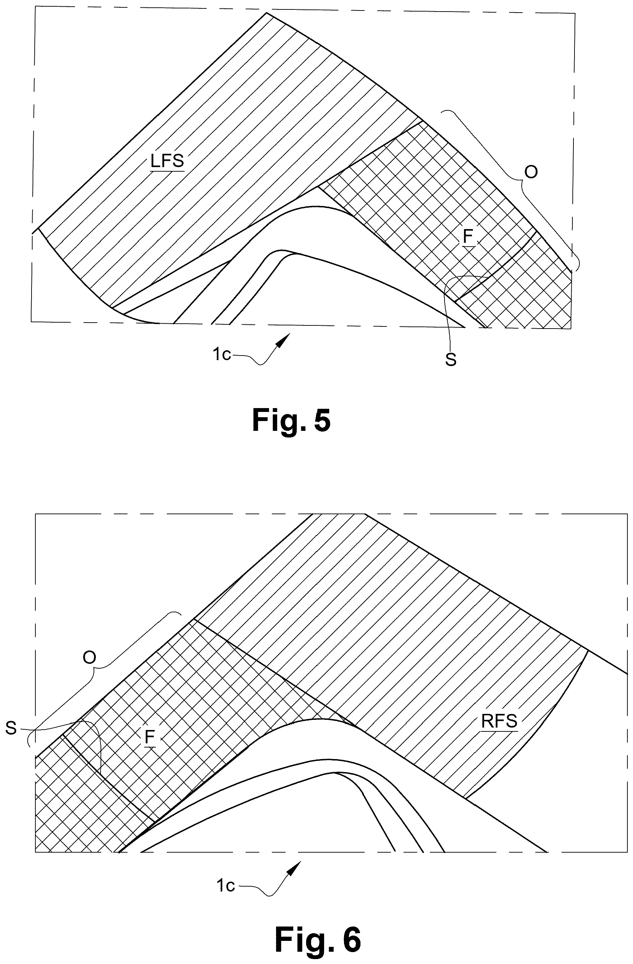

Figures 5 and 6 illustrate an example of the field of view captured by each monitoring system.

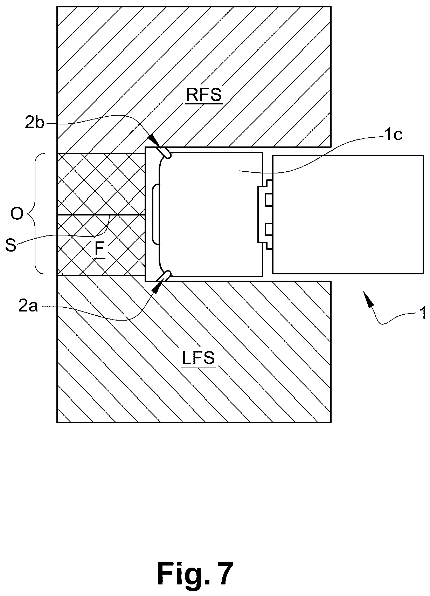

Figure 7 illustrates an example of the field of view captured by both monitoring systems.

### DETAILED DESCRIPTION OF EXAMPLE EMBODIMENTS OF THE INVENTION

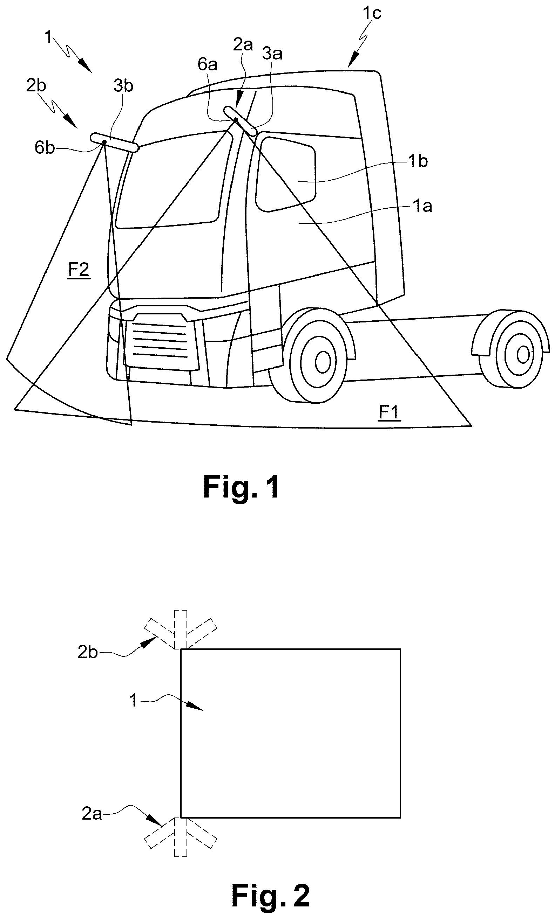

As illustrated in Figures 1 and 2, the vehicle 1 of the present invention comprises a cab 1c including a door 1a with a window 1b. The cab 1c may be provided with two camera monitoring systems (CMS) 2a, 2b, also called "camera assemblies", respectively a right and left CMS, with a supporting member, for example including an arm 3a, 3b and a pedestal 4. The pedestal 4 is fixed on an external surface of the vehicle 1, i.e. on vehicle bodywork, and the arm 3a, 3b is articulated with regard to the pedestal 4 by the mean of a folding connection 5. The arm 3a, 3b comprises at least a camera lens 6a, 6b. The arm 3a, 3b can take several positions with regard to the pedestal 4. Each supporting member is mounted on each side of the cab 1c and preferably on each A-pillar of the truck 1. In known manner, a truck includes two A-pillars, one on each side of the windshield. As its name indicates, a A-pillar includes a first pillar on windshield side and a second pillar inclined relative to first pillar on window side.

According to regulation UN ECE n°46, right and left CMS 2a, 2b are configured to provide images according to class II, IV when oriented to the rear (normal driving configuration) and to provide images according to class V when oriented to the front (at low speed for manoeuvres) as a function of the orientation of arm 3a, 3b.

The arm 3a, 3b may be oriented in at least three positions selected from a driving position (DP), a rest position (RP), and an intermediate position (IP) as disclosed in the patent application EP3442829.

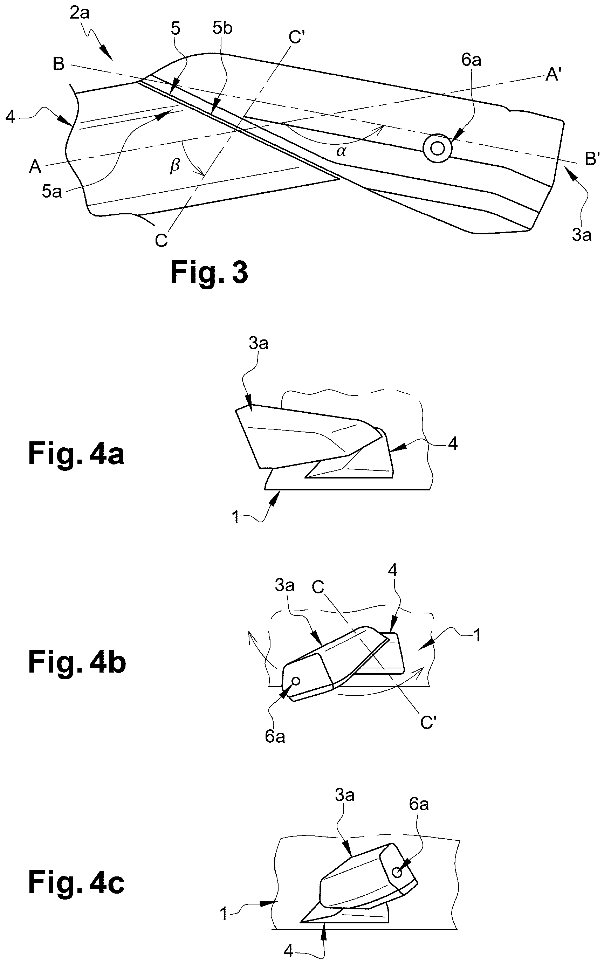

As illustrated in Figures 3 and 4b, in the DP, the arm 3a extends in the same vertical plan than the pedestal 4 and is inclined downward by a certain angle α with respect to the pedestal 4. In other words, the arm 3a, oriented along an axis BB', is inclined with regard to the pedestal 4, oriented along the axis AA'. The angle α corresponds to the angle between the axis AA', and the axis BB' when the pedestal 4 and the arm 3a are in the same vertical plan, which is the case at the DP. When the arm 3a is no longer in the same vertical plan the pedestal, then α denotes the projection of the angle between the axis AA', and the axis BB', onto the vertical plan comprising the axis AA', which is the case for RP and the IP described below. In other words, αDP for the driving position, corresponds to the angle between the axis AA', and BB' while the angles aRP for the rest position and αlP for the intermediate position, corresponds to the corresponding projection of the angle between the axis AA' and BB' on the same vertical plan comprising the axis AA'. In the DP, αDP may be comprised between around 20° and around 60°, preferably around 30° and 50°, more preferably between 35 and 45°. At the driving position, the camera 6a is oriented to collect the visual information necessary to drive the vehicle.

As illustrated in Figures 3 and 4c, in the RP, the camera assembly 2a is folded with regard to the pedestal 4, in such a way that the distal end of the arm 3a comes closer the vehicle surface on which is fixed the pedestal 4. At this rest position, the arm 3a is no longer in the same vertical plan than the pedestal 4. The arm 3a is angled, or even orthogonal, to the vertical plan comprising the pedestal 4, while the angle αRP is reduced, or even inversed, compared to its initial value αDP at the DP. The angle αRP is therefore comprised between around 10° and around 0°, or even -10°, if the arm 3a is oriented upward. At rest position, the camera assembly 2 is folded in a non-active position, wherein the camera 6a cannot collect the visual information necessary to the driving of the vehicle, and wherein it is preferably switched off.

As illustrated in Figures 3 and 4a, the camera assembly 2a also take an IP to avoid any collision with the vehicle door upon opening it. At such IP, the arm 3a moves away from the door swept while remaining functional. The orientation of the arm 3a at the IP may be the same as at the rest position RP. Alternatively, the arm 3a may have a different orientation at the IP. For example, at the intermediate position, the arm 3a may rotate frontward with respect to the driving direction, while it rotates rearward at the rest position. However, the reverse arrangement is still possible, wherein the arm 3a is oriented frontward at RP and backward at the IP. To this extend, the arm 3a is no longer in the same vertical plan than the pedestal 4. It is angled, or even orthogonal to the vertical plan comprising the pedestal 4, while the angle αIP is reduced, or inversed, compared to its initial value αDP at the driving position. The angle αIP is therefore comprised between around 10° and around 0°, or even -10°, if the arm 3a is oriented upward. The IP is preferably temporary, while the engine of the vehicle is still running, or when a certain level of energy is still supplied to the vehicle equipment. This can be the case when the driver is still in the cab, for example at rest in the living part, or working within the cargo body or around the vehicle.

The arm 3a can thus move from one of the positions to any one of the others. From the DP, it can in particular come at the IP as soon as the driver opens the door. It can in addition come at the intermediate position upon stopping the engine while keeping a residual energy to the vehicle equipment. It can then directly fold at the RP upon locking the door. It may come back at the DP once the driver closes the door, or after a temporization. Such a temporization allows to confirm whether the door is locked or whether the driver intends to drive before orienting the arm 3a. Otherwise, the arm 3a folds at the RP upon locking the door. Also, from the rest position the arm 3a may directly come to the DP upon switching on the engine or closing the door. Alternatively, it can adopt the IP. Any other parameters may also be considered to move the arm 3a from its IP to its DP. The particularity of the intermediate position being that the optical camera 6a remains active, the visual information may still be transferred toward the monitor inside the cab. Thus, the driver has still the opportunity to view the surrounding of his vehicle. The arm 3a can then directly fold from the IP to the RP upon locking the door. Alternatively, it can come back to the DP upon switching on the engine.

The folding connection 5, linking the pedestal 4 to the arm 3a, allows the rotation of the arm 3a with regards to an axis, which can be vertical, or non-vertical. The folding connection 5 preferably allows a rotation of the arm 3a along a non-vertical axis, in such a way that the projection αRP of the angles at RP and the projection αIP of the angle at the intermediate position on the vertical plan comprising the axis AA', are lower than the angle αDP at the DP. Under such conditions, the arm 3a rotates along an axis CC', comprised within the same vertical plan comprising the axis AA', and which forms an angle β with regard to the axis AA', corresponding to the orientation of the pedestal 4. The angle β is preferably comprised between around 10° and around 60°. To this extend, the arm 3a is connected to the pedestal 4 through a beveled interface, the plan of which is orthogonal to the axis CC'. The beveled interface is composed of a beveled surface 5a of the pedestal 4 and a complementary beveled surface 5b of the arm 3a. When folding from the DP to a backward position, corresponding either to the RP or the IP, the arm 3a is thus allowed to twist around its axis BB' in such a way that the camera 6a changes from a rearward orientation to an upward orientation. When folding from the DP toward a frontward direction, corresponding either to the RP or the IP, the camera 6a is allowed to twist around its axis BB' in such a way that the camera 6a changes from a rearward orientation to a downward orientation. The CMS can be automatically moved in backward position as long as vehicle speed is below a threshold speed, e.g. 10 km/h. Accordingly, backward position is dedicated for manoeuvres at low speed, such as docking, loading/unloading, parking operations, etc.

The camera assemblies 2a, 2b may comprise an actuator, not shown, able to move respectively the arm 3a, 3b from one to the other one of the above-mentioned positions. In order to trigger the move of the arm 3a with other commands of the vehicle, one or more electrical or electronic connections may be established with several sensors within the vehicle, such as the door sensor, a gear position sensor, a clutch sensor or a speed sensor.

The present invention relates to a method of combining a first and a second captured images with an overlapping field of view O to generate a wide-angle view extending around at least 270°, said images being respectively captured by right and left camera monitoring systems 2a, 2b as described above. Both cameras provide a captured image of a field of view having an angle of at least 270°, located in front F and front sides of the vehicle 1. The method may comprise the determination of overlapping field of view O. For example, the overlapping region O is an intermediate area delimiting the edges of images captured by the first 2a and the second 2b monitoring systems. overlapping region. Preferably, the overlapping field of view O corresponds to the overlap of part of the first field of view F1 and the second field of view F2 located in front of the truck 1.

In step A, the left camera 6a captures first images of a first field of view F1 located in a front F and left front side LFS of the truck 1. Then, in a step B, the right camera 6b captures second images of a second field of view F2 located in a front F and right front side RFS of the truck 1. The field of vision of each camera 6a, 6b is between 150 and 190° and for example of 180°.

In a step C, a controller (not shown) processes the captured images of the first 6a and the second 6b cameras. This consists in analysing the overlapping field of view O to identify a stitching line S between the two captured images. The stitching line S is the limit between the first field of view F1 and the second field of view F2. Stitching line is made of a succession of key points within region for overlap that extends approximately from the bottom to the top of the image. Stitching line can be straight or curved.

In a step D, the two images are merged at stitching line S and the resulting image is displayed on a display screen arranged inside truck cab, typically on SID.

Before merging the two images at stitching line, it is needed to flatten the images captured by the camera lenses 6a, 6b because such lenses are spherical and therefore generate curved images. Afterwards, the controller achieves a pixel-by-pixel comparison to delimit the overlapping field of view O and then defines a stitching line inside said region of overlap using a stitching algorithm.

Preferably, the controller processes the captured images of the first 6a and the second 6b camera monitoring systems by stitching horizontally and/or vertically the first and the second images in a way that part of first field of view F1 and the second field F2 of the intermediate area merges. Preferably, the stitching is performed by the controller by processing an algorithm that combines pixel-to-pixel comparison and gradient descent.

The method may further comprise transmitting the two captured images data provided by said two cameras 6a, 6b through a vehicle internal communication network (not shown). Preferably, the controller is linked to the vehicle internal communication network. Preferably, the controller is linked to or integrated into the ECU of the vehicle.

After the controller processes the image, the controller sends the unique image to the display screen that displayed the image to the driver can see a wide overview of the front and the front side of the truck 1.

Preferably, the truck 1 has a speed below 10km/h when the method is realized.

The method according to the present invention provides a wide field of view, i.e. having an angle of at least 270°, in front and front side of the vehicle cab by using two cameras monitoring systems located on the vehicle. The processing of the captured images including the stitching of an overlapping field of view comprising part of first field of view and the second field of view located in front of the vehicle permits to display a unique image having a high quality and visibility.

It is to be understood that the present invention is not limited to the embodiments described above and illustrated in the drawings; rather, the skilled person will recognize that many changes and modifications may be made within the scope of the appended claims.

## Claims

1. A method of combining a first and a second captured images with an overlapping field of view (O) to generate a wide-angle view extending around at least 270°, said two images being respectively captured by a right and a left camera monitoring systems (2a, 2b) of a truck (1) that comprise each a supporting member including a movable arm (3a, 3b) comprising respectively a camera lens (6a, 6b) and a pedestal (4), **characterized in that** the method comprises:
A. using the left camera (6a) to capture a first images of a first field of view (F1) located in a front (F) and left front side (LFS) of the truck (1),
B. using the right camera (6b) to capture a second image of a second field of view (F2) located in a front (F) and right front side (RFS) of the truck (1),
C. Processing the captured images of the right and left camera monitoring systems (6a, 6b), wherein this processing step consists in analysing the overlapping field of view (O) to identify a stitching line (S) between the two captured images,
D. merging the two captured images at stitching line (S) and display the resulting image on a display screen arranged inside truck cab.

2. The method according to claim 1, wherein the overlapping field of view (O) is an intermediate area delimiting the edges of images captured by the right and left camera monitoring systems (6a, 6b).

3. The method according to claim 1 or 2, wherein the overlapping field of view (O) corresponds to the overlap of part of first field of view (F1) and the second field of view (F2) located in front of the truck (1).

4. The method according to any of the preceding claims, wherein in step D), the captured images of the right and left camera monitoring systems (6a, 6b) are merged and stitched horizontally and/or vertically the first and the second images in a way that part of first field of view (F1) and part of the second field of view (F2).

5. The method according to the preceding claim, wherein the stitching is performed by a controller configured to process an algorithm that combines pixel-to-pixel comparison and gradient descent.

6. The method according to any of the preceding claims, wherein the field of view (F1, F2) of each camera monitoring system (6a, 6b) is between 150 and 190°.

7. The method according to any of the preceding claims, wherein the truck 1 has a speed below 10km/h.

8. The method according to any of the preceding claims, wherein the method further comprises transmitting the two captured images data provided by said two cameras (6a, 6b) through a vehicle internal communication network.

9. The method according to the preceding claim, wherein the controller is linked to the vehicle internal communication network.

10. The method according to any of the preceding claims, wherein each supporting member are mounted on each A-pillar of the truck (1).

11. The method according to any of the preceding claims, wherein each camera is configured to provide a field of view according to regulation UN ECE n°46 Class II and IV or Class V.
